# EUROPEAN PATENT SPECIFICATION

(11) **EP 3 872 695 B1**
(45) Date of publication and mention of the grant of the patent: **24.09.2025**
(21) Application number: 20305205.5
(22) Date of filing: 28.02.2020
(51) Int. Cl.: G06V 10/764, G06V 10/82, G06V 20/58

(54) **A METHOD AND SYSTEM OF ADAPTING AN INITIAL MODEL OF A NEURAL NETWORK**
VERFAHREN UND SYSTEM ZUR ANPASSUNG EINES AUSGANGSMODELLS EINES NEURONALEN NETZWERKS
PROCÉDÉ ET SYSTÈME D'ADAPTATION D'UN MODÈLE INITIAL D'UN RÉSEAU NEURONAL

(43) Date of publication of application: 01.09.2021
(73) Proprietor: TOYOTA JIDOSHA KABUSHIKI KAISHA, Toyota-shi, Aichi-ken 471-8571 (JP); Institut National de Recherche en Informatique et en Automatique (INRIA), 78153 Le Chesnay Cedex (FR)
(72) Inventor: OTHMEZOURI, Gabriel, 1140 BRUSSELS (BE); ERKENT, Ozgur, 38334 GRENOBLE (FR); LAUGIER, Christian, 38334 GRENOBLE (FR)
(74) Representative: Cabinet Beau de Loménie

(56) References cited:
- US-A1- 2019 130 220
- US-A1- 2019 244 107
- SANKARANARAYANAN SWAMI ET AL: "Learning from Synthetic Data: Addressing Domain Shift for Semantic Segmentation", 2018 IEEE/CVF CONFERENCE ON COMPUTER VISION AND PATTERN RECOGNITION, IEEE, 18 June 2018 (2018-06-18), pages 3752 - 3761, XP033476346, DOI: 10.1109/CVPR.2018.00395
- JIAN SHEN ET AL: "Wasserstein Distance Guided Representation Learning for Domain Adaptation", ARXIV.ORG, CORNELL UNIVERSITY LIBRARY, 201 OLIN LIBRARY CORNELL UNIVERSITY ITHACA, NY 14853, 5 July 2017 (2017-07-05), XP081309302

## Description

### Field of the invention:

The present invention relates to the field of image processing and more precisely to the improvement of classification performance of neural networks.

### Description of the Related Art:

The invention finds a privileged application in the field of images classification for autonomous driving vehicles, but may be applied to process images of any type.

Semantic information provides a valuable source for scene understanding around autonomous vehicles in order to plan their actions and make decisions.

Semantic segmentation of those scenes allows recognizing cars, pedestrians, traffic lanes, etc. Therefore, semantic segmentation is the backbone technique for autonomous driving systems or other automated systems.

Reference US 2019/130220 A1 discloses a vehicle, system and method of navigating a vehicle. The vehicle and system include a digital camera for capturing a target image of a target domain of the vehicle, and a processor configured to perform semantic segmentation of a target image in a target domain, classify an object in the target image, and navigate the vehicle based on the classified object in the target image.

Semantic image segmentation typically uses models such as neural networks to perform the segmentation. These models need to be trained.

Training a model typically comprises inputting known images to the model. For these images, a predetermined semantic segmentation is already known (an operator may have prepared the predetermined semantic segmentations of each image by labelling the images). The output of the model is then evaluated in view of the predetermined semantic segmentation, and the parameters of the model are adjusted if the output of the model differs from the predetermined semantic segmentation of an image.

In order to train a semantic segmentation model, a large number of images and predetermined semantic segmentations are necessary.

For example, it has been observed that the visual condition in bad weather (in particular when there is fog blocking the line of sight) creates visibility problems for drivers and for automated systems. While sensors and computer vision algorithms are constantly getting better, the improvements are usually benchmarked with images taken during good and bright weather. Those methods often fail to work well in other weather conditions. This prevents the automated systems from actually being used: it is not conceivable for a vehicle to avoid varying weather conditions, and the vehicle has to be able to distinguish different objects during those conditions.

It is thus desirable to train semantic segmentation models with varying weather images (images taken during multiple state of visibility due to weather conditions).

However, obtaining semantic segmentation data during those varying weather conditions is particularly difficult and time-consuming.

The invention proposes a method that may be used for adapting a model trained for images acquired in good weather conditions to other weather conditions.

### Summary of the invention:

More particularly, according to a first aspect, the invention proposes a method of adapting an initial mode of a neural network into an adapted model, wherein the initial model has been trained with labeled images of a source domain, said method comprising:
- copying the initial model into the adapted model;
- dividing the adapted model into an encoder part and a second part, wherein the second part is configured to process features output from the encoder part;
- adapting the adapted model to a target domain using random images of the source domain and random images of the target domain while fixing the parameters of the second part and adapting the parameters of the encoder part.

The adapted model minimizes a function of the two following distances:
- a first distance D1 measuring a distance between features of the source domain output of the encoder part of the initial model and features of the source domain output of the encoder part of the adapted model ; and
- a second distance D2 measuring a distribution distance between probabilities of these features obtained for images of the source domain and probabilities of these features obtained for images of the target domain.

The adapted model is used for performing semantic segmentation on new images of the source domain or of the target domain.

In a particular embodiment of the invention, the adapted model may be used for classifying, or segmenting the new images. The adapted model may also be used for creating bounding boxes enclosing pixels of the new images. The adapted model may also be used to identify a predetermined object in the new images. The adapted model may also be used to compute a measure of the new images, eg a light intensity.

From a very general point of view, the invention proposes a method of adapting a model trained for images of a source domain to images of a target domain.

In one application of the invention, images of the source domain are images acquired in high visibility conditions and images of the target domain are images acquired in low visibility conditions.

Also, the expressions "low visibility conditions" and "high visibility conditions" merely indicate that the visibility (for example according to a criterion set by the person skilled in the art) is better under the "high visibility conditions" than under the "low visibility conditions, the gap between the two visibility conditions can be chosen by the person skilled in the art according to the application.

According to the invention the adapted model is based on a trained model which has been trained for images of the source domain.

This trained model provides good accuracy for the images of the source domain but not for images of the target domain.

According to the invention, the adapted model is obtained by adapting weights of an encoder part of the trained model, the architecture of the trained model and the weights of the second part of the trained model being unchanged. This results in a shorter adaptation training time by considerably reducing the complexity of the adaptation while preserving a good accuracy for images of the source domain.

The cut of the initial trained model into an encoder part and a second part can be made at any layer of the initial model.

Selecting this layer may be achieved after trial-and-error, for example using images of the source domain. The man skilled in the art may select this layer while taking into account that:
- this layer must be deep enough so that the features output of the encoder vary enough;
- this layer be deep enough to have enough features to calculate the relevant distributions probabilities of D2;
- this layer should not be too deep, to avoid too high complexity for calculating D1 and D2.

The invention provides two distances D1 and D2.

D1 measures the distance between features of the source domain output of the encoder part of the initial model and features of the source domain output of the encoder part of the adapted model. This measure represents how the accuracy of the processing of images of the source domain degrades.

D2 measures a distribution distance between probabilities of features obtained for images of the source domain and probabilities of features obtained for images of the target domain. For D2 to be relevant, images of the target domain must statistically represent the same scenes as the images of the source domain but the invention does not require a correspondence among images of these two domains. D2 then represents the capacity of the adapted model to process images of the source domain and images of the target domain with the same accuracy.

Function f being based on D1 and D2, the invention provides an adapted model which is optimized such that the probability distributions are similar for source and target domains features while keeping the accuracy of the processing of images of the source domain close to the one achieved with the trained initial model.

The adapted model is therefore adapted to process new images of the source domain or of the target domain, in other words images acquired whatever the visibility conditions.

According to a particular embodiment, the function is in the form of (µD2+λD1), where *µ* and λ are positive real numbers.

Thes parameters *µ* and *λ* may be used to balance the weights of distances D1 or D2.

Other functions f based on D1 and D2 may be used. Preferably the function must be increasing of D1 and increasing of D2.

According to a particular embodiment, the step of adapting the parameters of the encoder part uses a self-supervision loss to measure the first distance D1.

Therefore, in this embodiment, unlabelled images are used for adapting the trained model to the adapted model, labelled-images being used only for training the initial model. This embodiment avoids the need for annotating images or obtaining semantic segmentation data in the target domain, for example for varying visibility conditions.

Measuring D2, the distribution distance between probabilities of features obtained for images of the source domain and probabilities of features obtained for images of the target domain, is complex.

In one embodiment, this distance is obtained statistically using a maximum mean discrepancy (MMD) metric.

According to another embodiment, the second distance D2 is obtained by a second neural network used to train adversarially said encoder part to adapt the parameters of the adapted model.

The second neural network is therefore trained to learn how to measure D2.

In this embodiment, the second neural network may be for example a 1st order Wasserstein neural network or a Jensen-Shannon neural network.

For more information about adversarially training, the man skilled in the art may in particular refer to:
T.-H. Vu, H. Jain, M. Bucher, M. Cord, and P. Pérez: "ADVENT: Adversarial Entropy Minimization for Domain Adaptation in Semantic Segmentation," in CVPR, 2019) : or
Y. Luo, L. Zheng, T. Guan, J. Yu, and Y. Yang, "Taking A Closer Look at Domain Shift: Category-level Adversaries for Semantics Consistent Domain Adaptation," in CVPR, 2019, pp. 2507-2516).

According to a second aspect, the invention concerns a system for adapting an initial model of a neural network into an adapted model wherein the initial model has been trained with labeled images of a source domain, said system comprising:
- a preparing module configured to copy the initial model into the adapted model and to divide the adapted model into an encoder part and a second part, wherein the second part is configured to process features output from the encoder part ; and
- an adapting module configured to adapt said adapted model to a target domain using random images of the source domain and random images of the target domain while fixing the parameters of said second part and adapting the parameters of said encoder part, said adapted model minimizing a function of the two following distances: - a first distance measuring a distance between features of the source domain output of the encoder part of the initial model and features of the source domain output of the encoder part of the adapted model ; and

- a second distance measuring a distribution distance between probabilities of these features obtained for images of the source domain and probabilities of these features obtained for images of the target domain,
   said adapted model being used for performing semantic segmentation on new images of said source domain or of said target domain.

In one embodiment of the invention, the system is a computer comprising a processor configured to execute the instructions of a computer program.

According to a third aspect, the invention related to a computer program comprising instructions to execute a method of adapting an initial model as mentioned above.

The invention also relate to storage means comprising:
- an initial model of a neural network which has been trained with labelled images of a source domain; and
- an adapted model obtained by adaptation of said initial model using an adaptation method as mentioned above,
wherein the initial model and the adapted model both have an encoder part and a second part configured to process features output from their respective encoder part, the second part of the initial model and the second part of the adapted model having the same parameters.

The invention also concerns a vehicle comprising an image acquisition module configured to acquire images, storage means comprising an adapted model as mentioned above and a module configured to process the acquired images using the adapted model.

### Brief description of the drawings:

How the present invention may be put into effect will now be described by way of example with reference to the appended drawings, in which:
Figure 1 shows a flow chart of a method of adapting an initial model of a neural network according to one embodiment of the invention.
Figure 2 represents an example of the training of an initial model.
Figure 3 gives examples of images that can be used in the invention.
Figures 4 and 5 represent the architectures of the initial model and of the adapted model.
Figure 6 represents an encoder part and a second part of the initial model of Figure 2 during the training.
Figure 7 represents an encoder part and a second part of the target model during adaptation.
Figure 8 represents an adaptation step that may be used in a specific embodiment of the invention.
Figure 9 represents a system for adapting an initial model of a neural network according to one embodiment of the invention.
Figure 10 represents the architecture of the system of Figure 9 according to one embodiment of the invention.
Figure 11 represents a vehicle according to one embodiment of the invention.

### Description of the embodiment:

Reference will now be made in detail to exemplary embodiments of the disclosure, examples of which are illustrated in the accompanying drawings. Wherever possible, the same reference numbers will be used throughout the drawings to refer to the same or like parts.

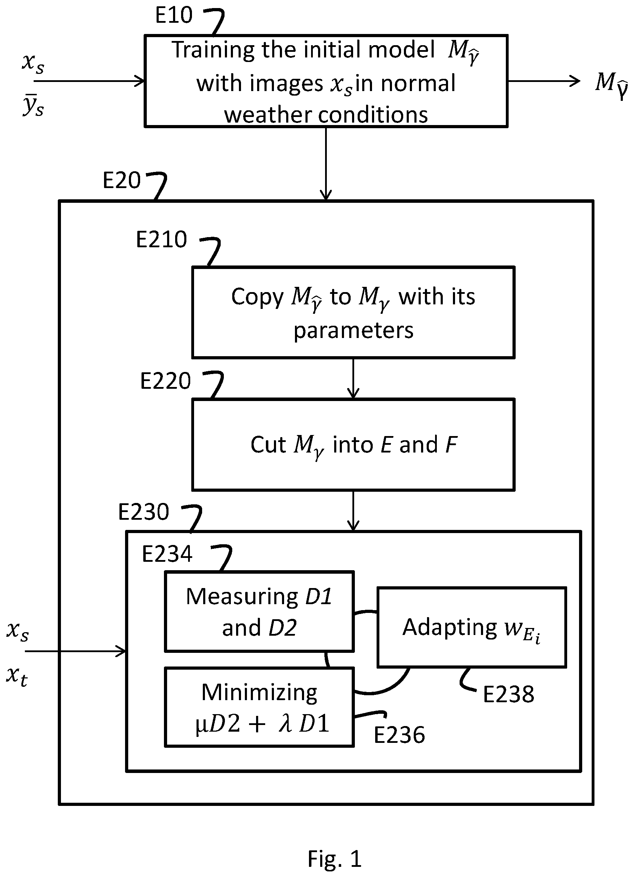

Figure 1 shows a flow chart of a method of adapting an initial model *M*_{γ̂} of a neural network according to one embodiment of the invention.

The invention has been implemented with Segnet, MobileNeyV2 and DeepLabV3 but others architectures may be used.

More precisely, the method of the invention adapts the initial model *M*_{γ̂} trained with source domain images *xₛ* obtained in high visibility conditions to images of a target domain *xₜ* obtained in low visibility conditions (eg dark, foggy or snowy conditions).

At step E10, the initial model *M*_{γ̂} is trained with source domain images *xₛ* obtained in high visibility conditions.

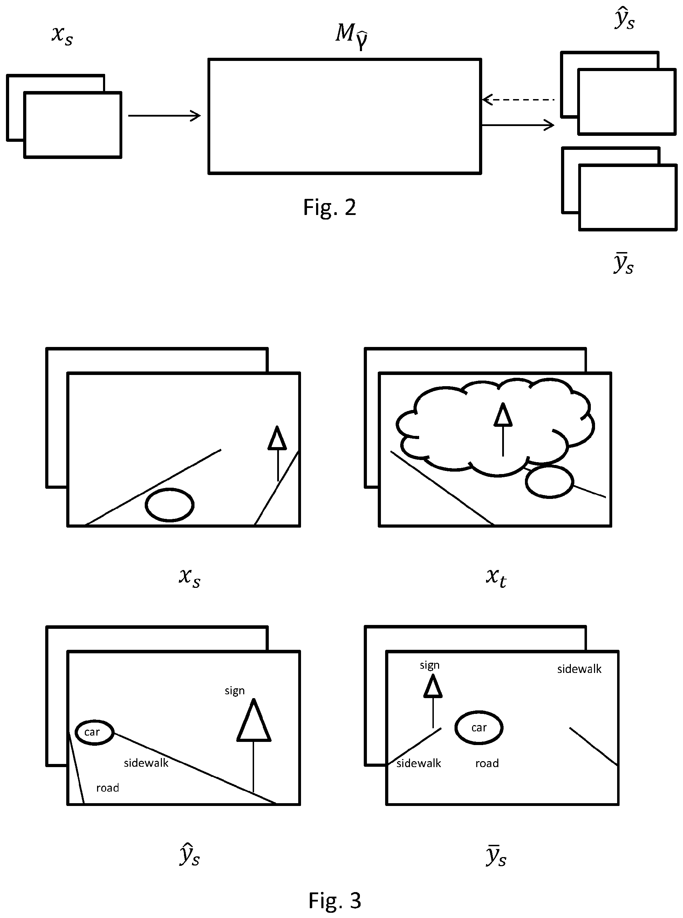

As shown on Figures 2 and 3, labeled images *ŷₛ* are obtained. This training step E10 uses ground truth images *y̅ₛ* for the source domain. On figure 2 and subsequent figures, the dotted arrow represents the back-propagation.

Figure 3 represents examples of images *xₛ* of the source domain, with their corresponding labeled images of ground truth *y̅ₛ* and *ŷₛ* labeled images output by the initial model *M*_{γ̂}. The specific example of Figure 3 represents an image *xₛ* represented a scene obtained in high visibility conditions, the labeled image *ŷₛ* in which a sign, a sidewalk, a car and a road have been detected and an image *xₜ* of the target domain, ie an image of the same scene obtained in low visibility conditions.

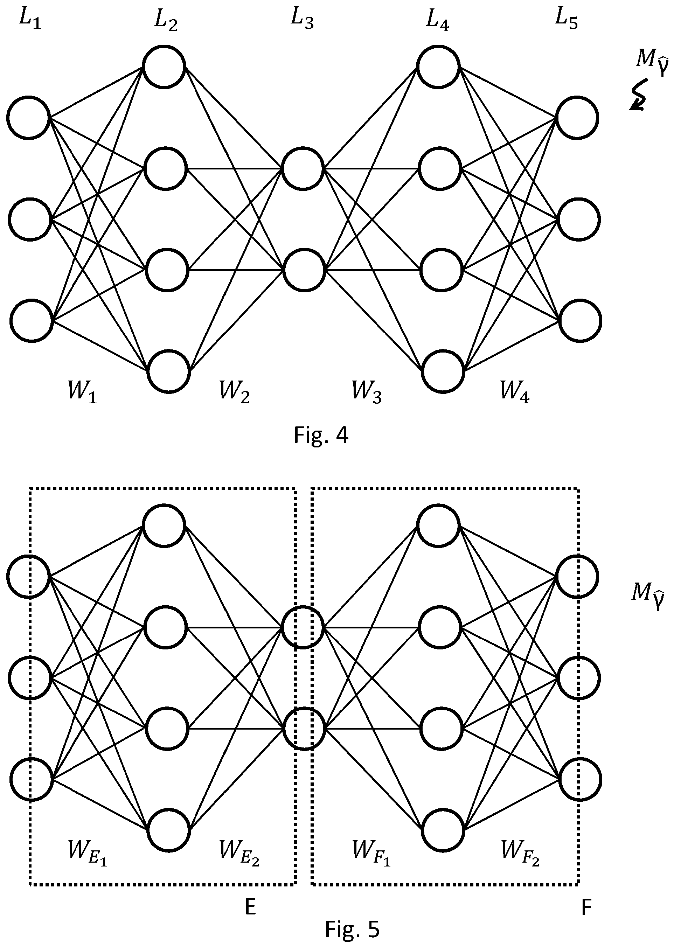

Figure 4 is a representation of the architecture of the initial model *M*_{γ̂}. In this example, 5 layers are represented : the input layer *L*₁, the **output layer** *L*₅, and three hidden layers *L₂*, *L*₃, *L*₄. The parameters (or weights) of the initial model *M*_{γ̂} are noted *W*₁, *W*₂, *W*₃, *W*₄.

In an adaptation step E20, the initial model *M*_{γ̂} is adapted to the target domain. The adapted model is noted *M_{γ}.* This adaptation step E20 comprises two preparing steps of copying E210, and dividing E220 the initial model to initialize the adapted model and an adaptation step per se E230 of the adapted model.

The initial model *M*_{γ̂} is copied to the adapted model *M_{γ}* with its parameters during the copying step E210.

Then, at step E220, the adapted model *M_{γ}* is divided into two parts: an encoder part *E* and a second part *F*. This division can be made at any layer of the initial model *M*_{γ̂} the output layer of the encoder part *E* being the input layer of the classification part *F*.

Selecting this layer may be achieved after trial-and-error, for example using images of the source domain. The man skilled in the art may select this layer while taking into account that:
- this layer must be deep enough so that the features output of the encoder vary enough;
- this layer be deep enough to have enough features to calculate the relevant distributions probabilities of D2;
- this layer should not be too deep, to avoid too high complexity for calculating D1 and D2.

From experience, a good accuracy may be achieved when the cut is made between the 2^{nd} and the 6^{th} layers for networks of size in between 10 and 15 layers.

Figure 5 represents the architecture of the adapted model *M_{γ}* after the dividing step E220 assuming that the cut was made on layer *L*₃ of the initial model *M*_{γ̂}. If we respectively note *W_{Eᵢ}* the weights of the encoder part *E* and *W_{Fᵢ}* the weights of the second part *F,* then after step E220: *W*_{*E*₁} *= W*₁; *W*_{*E*₂} *= W*₂; *W*_{*F*₁} *= W*₃ and *W*_{*F*₂} *= W*₄.

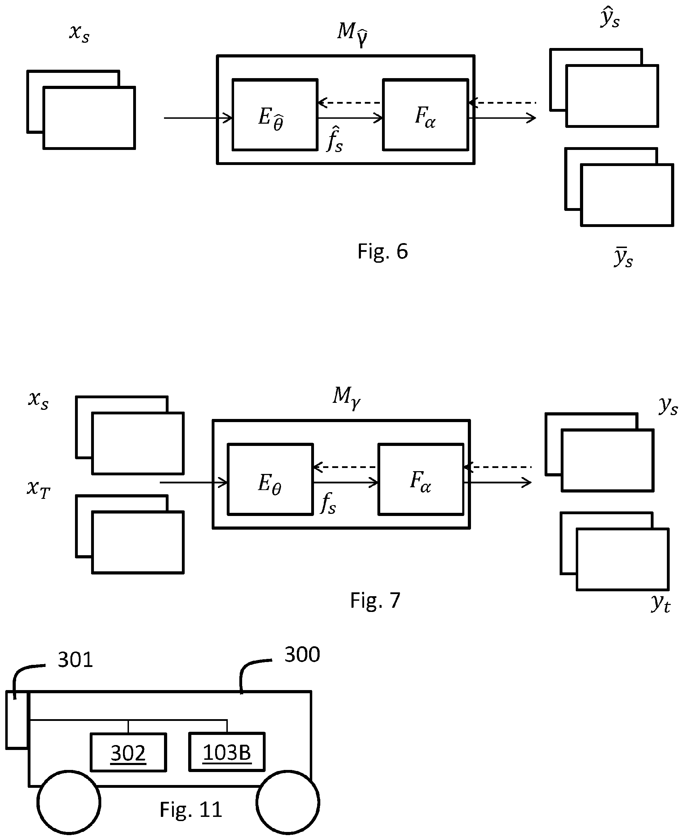

Figure 6 is similar to Figure 2. In Figure 6, we note *θ̂* the set of parameters of the encoder part *E* of the initial model *M*_{γ̂}*, f̂ₛ* the set of features from the source domain *xₛ* output of the encoder part *E* of the initial model *M*_{γ̂} and *α* the set of parameters of the second part *F*.

During the adaptation step E230, the adapted model *M_{γ}* is adapted to the target domain by using random images *xₛ* of the source domain and random images *xₜ* of the target domain. No correspondence exists between these images.

According to the invention, the adapted model *M_{γ}* has the same architecture as the initial model *M*_{γ̂}*,* only the weights *W_{Eᵢ}* of the encoder part *E* being adapted.

As represented on Figure 7, we note:
- y*ₛ* the segmentation of images of the source domain;
- y*ₜ* the segmentation of images of the target domain with the adapted model *M_{γ}*;
- *θ* the set of parameters of the encoder part *E* of the adapted model *M_{γ}*; and
- *fₛ* the set of features from the source domain *xₛ* output of the encoder part *E* of the adapted model *M_{γ}.*

The set *α* of parameters of the second part *F* is unchanged.

According to the invention, the adaption comprises minimizing a function f of distances D1 and D2 detailed below.

In this specific embodiment, *f* is in the form of (*µD*2 + *λD*1), where *λ* and *µ* are real positive numbers.

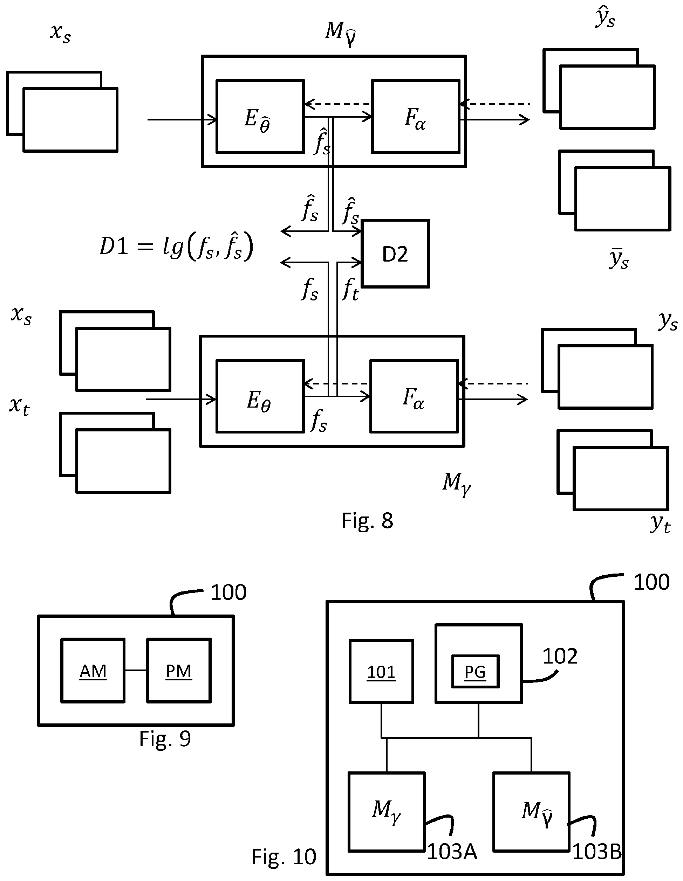

The adaptation step E230 is represented by Figure 8.

The adaptation step E230 comprises a step E234 of measuring:
- a first distance *D1* between (i) the features *f̂ₛ* of the source domain *xₛ* output of the encoder part *E* of the initial model *M*_{γ̂} and (ii) the features *fₛ* of the source domain *xₛ* output of the encoder part *E* of the adapted model *M_{γ}* ; and
- a second distance *D2* between (i) the probabilities *Pr*₍*_{f̂}*_{ₛ)*~p*} of features obtained for images *xₛ* of the source domain and (ii) the probabilities *Pr*_{(*E*_{θ}(*x*ₜ))~*q*} of features obtained for images *xₜ* of the target domain.

The adapted model *M_{γ}* is optimized (by adapting the weights of the encoder part at step E238) such that the probabilities distributions *Prₚ* and *Pr_{q}* are similar for source and target domain features (measured by difference *D2*) and the accuracy of the source domain does not degrade (measured by *D1,* Fbeing unchanged).

In this specific embodiment, the step E238 of adapting the parameters *W_{Eᵢ}* of said encoder part *E* uses a self-supervision loss to measure the first distance D1.

In this specific embodiment, this optimization consists in minimizing, *f =* (*µD2 + λD*1) (step E236) where *µ* and *λ* are real parameters that can be adjusted to balance D1 and D2.

In one embodiment, at step E234, the second distance D2 can be obtained statistically using a maximum mean discrepancy MMD metric.

But in the specific embodiment described here, the second distance *D2* is obtained by a second neural network used to train adversarially the said encoder part *E* to adapt (E238) its parameters *W_{Eᵢ}.*

Figure 9 represents a system 100 for adapting an initial model of a neural network according to one embodiment of the invention.

This system comprises a preparing module PM and an adapting module AM.

The preparing module is configured to obtain an initial model *M*_{γ̂} which has been trained with labeled images *xₛ*,*y̅ₛ* of a source domain, to copy this initial model into an adapted model *M_{γ}* and to divide the adapted model into an encoder part E and a second part F.

The adapting module AM is configured to adapt the adapted model *M_{γ}* to a target domain *xₜ* using random images *xₛ* of the source domain and random images *xₜ* of the target domain as mentioned before.

Figure 10 represents the architecture of the system of Figure 9 according to one embodiment of the invention.

In this specific embodiment, the system 100 is a computer. It comprises a processor 101, a read only memory 102, and two flash memories 103A, 103B.

The read only memory 102 comprises a computer program PG comprising instructions to execute a method of adapting an initial model as mentioned above when it is executed by the processor 101.

In this specific embodiment, flash memory 103A comprises the initial model *M*_{γ̂} and flash memory 103 B comprises the adapted model *M_{γ}.*

Flash memories 103A and 103 B constitute a storage means according to an embodiment of the invention.

In another embodiment, the initial model *M*_{γ̂} and the adapted model *M_{γ}* are stored in different zones of a same flash memory. Such a flash memory constitutes a storage means according to another embodiment of the invention.

Figure 11 represents a vehicle 300 comprising an image acquisition module 301 and a system 302 comprising a model trained by the method as described above to perform semantic segmentation on the images acquired by the image acquisition module.

Figure 11 represents a vehicle 300 according to one embodiment of the invention. It comprises an image acquisition module 301 configured to acquire images, storage means 103B comprising an adapted model *M_{γ}* as mentioned above and a module 302 configured to classify the images acquired by the module 301 using the adapted model.

In the specific embodiment described before, the second part F is a classifier.

The claims method adapts (at step E20) an initial model *M*_{γ̂} of a neural network into an adapted model *M_{γ},* the initial model *M*_{γ̂} having been trained (at step E10) with labeled images of a source domain.

In this specific embodiments, these labeled images are images *xₛ* of the source domain, with their corresponding labeled images of ground truth *y̅ₛ*.

The method comprises:
- copying (at step E210) the initial model *M*_{γ̂} into the adapted model *M_{γ}*;
- dividing (at step E220) the adapted model *M_{γ}* into an encoder part *E* and a classification part *F* configured to process features *f̂ₛ* output from the encoder part *E.*

The adapted model *M_{γ}* is adapted to a target domain *xₜ* using random images *xₛ* of the source domain and random images *xₜ* of the target domain while fixing the parameters *W_{Fᵢ}* of the classification part and adapting (at step E238) the parameters *W_{Eᵢ}* of the encoder part *E*, the adapted model *M_{γ}* minimizing the *f* function the two distances *D1* and *D2.*

The adapted model *M_{γ}* may be used to classify new images of the source domain or of said target domain.

## Claims

1. A method of adapting (E20) an initial model (*M*_{γ̂}) of a neural network into an adapted model (*M_{γ}*), wherein the initial model (*M*_{γ̂}) has been trained (E10) with labeled images (*xₛ*,*y̅ₛ*) of a source domain, said method comprising:
- copying (E210) the initial model (*M*_{γ̂}) into the adapted model (*M_{γ}*);
- dividing (E220) the adapted model (*M_{γ}*) into an encoder part *(E)* and a second part (*F*), wherein the second part (*F)* is configured to process features (*f̂ₛ*) output from said encoder part (*E*);
- adapting said adapted model (*M_{γ}*) to a target domain (*xₜ*) using random images (*xₛ*) of the source domain and random images (*xₜ*) of the target domain while fixing the parameters (*W_{Fᵢ}*) of said second part (F) and adapting (E238) the parameters (*W_{Eᵢ}*) of said encoder part (*E*), said adapted model (*M_{γ}*) minimizing (E236) a function (*f*) of the following two distances:
- a first distance (*D1)* measuring (E234) a distance between features (*f̂ₛ*) of the source domain (*xₛ*) output of the encoder part (*E*) of the initial model (*M*_{γ̂}) and features (*fₛ*) of the source domain (*xₛ*) output of the encoder part (*E*) of the adapted model (*M_{γ}*); and
- a second distance (*D2)* measuring (E234) a distribution distance between probabilities (*Pr*₍*_{f̂}*_{ₛ)~*p*}) of said features obtained for images (*xₛ*) of the source domain and probabilities (*Pr*_{(*E*_{θ}(*x*ₜ))*~q*}) of said features obtained for images (*xₜ*) of the target domain,
said adapted model (*M_{γ}*) being used for performing semantic segmentation on new images of said source domain or of said target domain.

2. The method of claim 1 wherein said function (*f*) is in the form of (*µD*2 + *λD*1), where *µ* and *λ* are positive real numbers.

3. The method of claim 1 or 2, wherein adapting the parameters (*W_{Eᵢ}*) of said encoder part (*E*) uses (E238) a self-supervision loss to measure said first distance (D1).

4. The method of any one of claims 1 to 3, wherein said second distance *(D2)* is obtained (E234) by a second neural network used to train adversarially said encoder part *(E)* to adapt said parameters (*W_{Eᵢ}*) of said encoder part of said adapted model (*M_{γ}*).

5. The method of claim 4 wherein said second neural network is a 1^{st} order Wasserstein (W-GAN) neural network or a Jensen-Shannon (GAN) neural network.

6. The method of any one of claims 1 to 3, wherein said second distance *(D2)* is obtained statistically using a maximum mean discrepancy (MMD) metric.

7. A system (100) for adapting (E20) an initial model (*M*_{γ̂}) of a neural network into an adapted model (*M_{γ}*), wherein the initial model (*M*_{γ̂}) has been trained (E10) with labeled images (*xₛ*,*y̅ₛ*) of a source domain, said system comprising:
- a preparing module (PM) configured to copy (E210) the initial model (*M*_{γ̂}) into the adapted model (*M_{γ}*) and to divide (E220) the adapted model (*M_{γ}*) into an encoder part *(E)* and a second part (*F*), wherein the second part (*F)* is configured to process features (*f̂ₛ*) output from said encoder part (*E*); and
- an adapting module (AM) configured to adapt said adapted model (*M_{γ}*) to a target domain (*xₜ*) using random images (*xₛ*) of the source domain and random images (*xₜ*) of the target domain while fixing the parameters (*W_{Fᵢ}*) of said second part (F) and adapting (E238) the parameters (*W_{Eᵢ}*) of said encoder part (*E*), said adapted model (*M_{γ}*) minimizing (E236) a function (*f*) of the following two distances:
- a first distance (*D1)* measuring (E234) a distance between features (*f̂ₛ*) of the source domain (*xₛ*) output of the encoder part (*E*) of the initial model (*M*_{γ̂}) and features (*fₛ*) of the source domain (*xₛ*) output of the encoder part (*E*) of the adapted model (*M_{γ}*); and
- a second distance (*D2)* measuring (E234) a distribution distance between probabilities *(Pr*_{(*f*ₛ)~*p*}) of said features obtained for images (*xₛ*) of the source domain and probabilities (*Pr*_{(*E*_{θ}(xₜ))~*q*}) of said features obtained for images (*xₜ*) of the target domain,
said adapted model (*M_{γ}*) being used for performing semantic segmentation on new images of said source domain or of said target domain.

8. A computer program (PG) comprising instructions to execute a method of adapting an initial model according to any one of claims 1 to 6 when it is executed by a processor (101).

## Patentansprüche

1. Verfahren zum Anpassen (E20) eines Ausgangsmodells (*M*_{γ̂}) eines neuronalen Netzes an ein angepasstes Modell (*M_{γ}*), wobei das Ausgangsmodell (*M*_{γ̂}) mit markierten Bildern (*xₛ, Y̅ₛ*) einer Quellendomäne trainiert wurde (E10), das Verfahren umfassend:
- Kopieren (E210) des Ausgangsmodells (*M*_{γ̂}) in das angepasste Modell ( *M_{γ}*);
- Aufteilen (E220) des angepassten Modells (*M_{γ}*) in einen Kodiererteil (*E*) und einen zweiten Teil (F), wobei der zweite Teil (*F*) konfiguriert ist, um von dem Kodiererteil (*E*) ausgegebene Merkmale (*f̂ₛ*) zu verarbeiten;
- Anpassen des angepassten Modells (*M_{γ}*) an eine Zieldomäne (*xₜ*) unter Verwendung von Zufallsbildern (*xₛ*) der Quellendomäne und Zufallsbildern (*xₜ*) der Zieldomäne, wobei die Parameter (*W_{Fᵢ}*) des zweiten Teils (*F*) festgelegt und die Parameter (*W_{Eᵢ}*) des Kodiererteils (*E*) angepasst (E238) werden, wobei das angepasste Modell (*M_{γ}*) eine Funktion (*f*) der zwei folgenden Abstände minimiert (E236):
- einen ersten Abstand (*D1*), der einen Abstand zwischen Merkmalen (*f̂ₛ*) der Quellendomäne (*xₛ*), die von dem Kodiererteil(*E*) des Ausgangsmodells (*M*_{γ̂}) ausgegeben werden, und Merkmalen (*fₛ*) der Quellendomäne (*xₛ*), die von dem Kodiererteil (*E*) des angepassten Modells (*M_{γ}*) ausgegeben werden, misst (E234); und
- einen zweiten Abstand (*D2*), der einen Verteilungsabstand zwischen den Wahrscheinlichkeiten (*Pr*₍*_{f̂}*_{ₛ)~*p*}) der für die Bilder (*xₛ*) des Quellbereichs erlangten Merkmale und den Wahrscheinlichkeiten (*Pr*_{(*E*_{θ}(*x*ₜ))~*q*}) der für die Bilder (*xₜ*) des Zielbereichs erlangten Merkmale misst (E234),
wobei das angepasste Modell (*M_{γ}*) zum Durchführen von semantischer Segmentierung an neuen Bildern der Quellendomäne oder der Zieldomäne verwendet wird.

2. Verfahren nach Anspruch 1, wobei die Funktion (*f*) die Form von (*µD2+ λD1*) aufweist, wobei *µ* und *λ* positive reelle Zahlen sind.

3. Verfahren nach Anspruch 1 oder 2,
wobei das Anpassen der Parameter (*W_{Eᵢ}*) des Kodiererteils (*E*) einen Selbstüberwachungsverlust verwendet (E238), um den ersten Abstand (*D1*) zu messen.

4. Verfahren nach einem der Ansprüche 1 bis 3, wobei der zweite Abstand (*D2*) durch ein zweites neuronales Netz (E234) erlangt wird, das verwendet wird, um den Kodiererteil (*E*) adversarisch zu trainieren, um die Parameter ( *W_{Eᵢ}*) des Kodiererteils des angepassten Modells (*M_{γ}*) anzupassen.

5. Verfahren nach Anspruch 4, wobei das zweite neuronale Netz ein Wasserstein-Netz (W-GAN) erster Ordnung oder ein neuronales Jensen-Shannon-Netz (GAN) ist.

6. Verfahren nach einem der Ansprüche 1 bis 3, wobei der zweite Abstand (*D2*) statistisch unter Verwendung einer Metrik der maximalen mittleren Diskrepanz (MMD) erlangt wird.

7. System (100) zum Anpassen (E20) eines Ausgangsmodells (*M_{γ}*) eines neuronalen Netzes an ein angepasstes Modell (*M_{γ}*), wobei das Ausgangsmodell (*M*_{γ̂}) mit markierten Bildern (*xₛ, Y̅ₛ*) einer Quellendomäne trainiert wurde (E10), das System umfassend:
- ein Vorbereitungsmodul (PM), das konfiguriert ist, um das Ausgangsmodell ( *M_{γ̂}*) in das angepasste Modell (*M_{γ}*) zu kopieren (E210) und das angepasste Modell (*M_{γ}*) in einen Kodiererteil (*E*) und einen zweiten Teil *(F)* zu unterteilen (E220), wobei der zweite Teil (*F*) konfiguriert ist, um von dem Kodiererteil (*E*) ausgegebene Merkmale (*f̂ₛ*) zu verarbeiten; und
- ein Anpassungsmodul (AM), das konfiguriert ist, um das angepasste Modell (*M_{γ}*) unter Verwendung von Zufallsbildern (*xₛ*) der Quellendomäne und Zufallsbildern (*xₜ*) der Zieldomäne an eine Zieldomäne (*xₜ*) anzupassen, wobei die Parameter (*W_{Fᵢ}*) des zweiten Teils (*F*) festgelegt und die Parameter (*W_{Eᵢ}*) des Kodiererteils (*E*) angepasst (E238) werden, wobei das angepasste Modell (*M_{γ}*) eine Funktion (*f*) der zwei folgenden Abstände minimiert (E236):
- einen ersten Abstand (*D1*), der einen Abstand zwischen Merkmalen (*f̂ₛ*) der Quellendomäne (*xₛ*), die von dem Kodiererteil (*E*) des Ausgangsmodells (*M*_{γ̂}) ausgegeben werden, und Merkmalen (*fₛ*) der Quellendomäne (*xₛ*), die von dem Kodiererteil (*E*) des angepassten Modells (*M_{γ}*) ausgegeben werden, misst (E234); und
- einen zweiten Abstand (*D2*), der einen Verteilungsabstand zwischen den Wahrscheinlichkeiten (*Pr*₍*_{f̂}*_{ₛ)~*p*}) der für die Bilder (*xₛ*) des Quellbereichs erlangten Merkmale und den Wahrscheinlichkeiten (*Pr*_{(*E*_{θ}(xₜ))~*q*}) der für die Bilder (*xₜ*) des Zielbereichs erlangten Merkmale misst (E234),
wobei das angepasste Modell (*M_{γ}*) zum Durchführen von semantischer Segmentierung an neuen Bildern der Quellendomäne oder der Zieldomäne verwendet wird.

8. Computerprogramm (PG), umfassend Anweisungen zum Ausführen eines Verfahrens zum Anpassen eines Ausgangsmodells nach einem der Ansprüche 1 bis 6, wenn es von einem Prozessor (101) ausgeführt wird.

## Revendications

1. Procédé d'adaptation (E20) d'un modèle initial (Mγ̂ ) d'un réseau neuronal en un modèle adapté (M_{γ}), le modèle initial (Mγ̂) ayant été entraîné (E10) avec des images étiquetées (xₛ, *y̅ₛ*) d'un domaine source, ledit procédé comprenant :
- la copie (E210) du modèle initial (M*γ̂*) dans le modèle adapté (M_{γ}) ;
- la division (E220) du modèle adapté (M_{γ}) en une partie encodeur (E) et une deuxième partie (F), la deuxième partie (F) étant configurée pour traiter des caractéristiques (*f̂ₛ*) délivrées par ladite partie encodeur (E) ;
- l'adaptation dudit modèle adapté (M_{γ}) à un domaine cible (xₜ) en utilisant des images aléatoires (xₛ) du domaine source et des images aléatoires (xₜ) du domaine cible tout en fixant les paramètres (W_{Fi}) de ladite deuxième partie (F) et en adaptant (E238) des paramètres (W_{Ei}) de ladite partie encodeur (E), ledit modèle adapté (M_{γ}) minimisant (E236) une fonction (f) des deux distances suivantes :
- une première distance (D1) mesurant (E234) une distance entre des caractéristiques (*f̂ₛ*) du domaine source (x*ₛ*) délivrées par la partie encodeur (E) du modèle initial (M*γ̂*) et des caractéristiques (*f̂ₛ*) du domaine source (x*ₛ*) délivrées par la partie codeur (E) du modèle adapté (M_{γ}) ; et
- une deuxième distance (D2) mesurant (E234) une distance de distribution entre des probabilités (Pr₍*f*_{s)~p}) desdites caractéristiques obtenues pour des images (xₛ) du domaine source et des probabilités (Pr_{(Eθ(xt))~q}) desdites caractéristiques obtenues pour des images (xₜ) du domaine cible,
ledit modèle adapté (M_{γ}) étant utilisé pour réaliser une segmentation sémantique sur de nouvelles images dudit domaine source ou dudit domaine cible.

2. Procédé selon la revendication 1 selon lequel ladite fonction (f) est sous la forme de (µD2 + λD1), où µ et λ sont des nombres réels positifs.

3. Procédé selon la revendication 1 ou 2, selon lequel l'adaptation des paramètres (W_{Ei}) de ladite partie codeur (E) utilise (E238) une perte d'auto-supervision pour mesurer ladite première distance (D1).

4. Procédé selon l'une quelconque des revendications 1 à 3, selon lequel ladite deuxième distance (D2) est obtenue (E234) par un deuxième réseau neuronal utilisé pour entraîner de manière antagoniste ladite partie encodeur (E) pour adapter lesdits paramètres (W_{Ei}) de ladite partie encodeur dudit modèle adapté (M_{γ}).

5. Procédé selon la revendication 4 selon lequel ledit deuxième réseau neuronal est un réseau neuronal de Wasserstein d'ordre 1 (W-GAN) ou un réseau neuronal de Jensen-Shannon (GAN).

6. Procédé selon l'une quelconque des revendications 1 à 3, selon lequel ladite deuxième distance (D2) est obtenue de manière statistique en utilisant une métrique de divergence moyenne maximale (MMD).

7. Système (100) pour adapter (E20) un modèle initial (M*γ̂*) d'un réseau neuronal en un modèle adapté (M_{γ}), le modèle initial (M*γ̂*) ayant été entraîné (E10) avec des images étiquetées (x*ₛ*, y̅*ₛ*) d'un domaine source, ledit système comprenant :
- un module de préparation (PM) configuré pour copier (E210) le modèle initial (M*γ̂*) dans le modèle adapté (M_{γ}) et pour diviser (E220) le modèle adapté (M_{γ}) en une partie encodeur (E) et une deuxième partie (F), la deuxième partie (F) étant configurée pour traiter des caractéristiques (*f̂ₛ*) délivrées par ladite partie encodeur (E) ; et
- un module d'adaptation (AM) configuré pour adapter ledit modèle adapté (M_{γ}) à un domaine cible (xₜ) en utilisant des images aléatoires (xₛ) du domaine source et des images aléatoires (xₜ) du domaine cible tout en fixant les paramètres (W_{Fi}) de ladite deuxième partie (F) et adapter (E238) les paramètres (W_{Ei}) de ladite partie encodeur (E), ledit modèle adapté (M_{γ}) minimisant (E236) une fonction (f) des deux distances suivantes :
- une première distance (D1) mesurant (E234) une distance entre des caractéristiques (*f̂ₛ*) du domaine source (x*ₛ*) délivrées par la partie encodeur (E) du modèle initial (M*γ̂*) et des caractéristiques (*f̂ₛ*) du domaine source (x*ₛ*) délivrées par la partie encodeur (E) du modèle adapté (M_{γ}) ; et
- une deuxième distance (D2) mesurant (E234) une distance de distribution entre des probabilités (Pr₍f_{s)~p}) desdites caractéristiques obtenues pour des images (xₛ) du domaine source et des probabilités (Pr_{(Eθ(xt))~q}) desdites caractéristiques obtenues pour des images (xₜ) du domaine cible,
ledit modèle adapté (M_{γ}) étant utilisé pour réaliser une segmentation sémantique sur de nouvelles images dudit domaine source ou dudit domaine cible.

8. Programme informatique (PG) comprenant des instructions pour exécuter un procédé d'adaptation d'un modèle initial selon l'une quelconque des revendications 1 à 6 quand il est exécuté par un processeur (101).
